(19) Europäisches Patentamt
European Patent Office
Office européen des brevets

(11) **EP 4 733 804 A1**

(12) **DEMANDE DE BREVET EUROPEEN**

(43) Date de publication:
**29.04.2026 Bulletin 2026/18**

(21) Numéro de dépôt: **25198530.5**

(22) Date de dépôt: **27.08.2025**

(51) Classification Internationale des Brevets (IPC):
**G01S 7/481** (2006.01)  **G01S 7/4912** (2020.01)
**G01S 17/34** (2020.01)  **G01S 17/894** (2020.01)

(52) Classification Coopérative des Brevets (CPC):
**G01S 7/4811; G01S 7/4812; G01S 7/4917;
G01S 17/34; G01S 17/894**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **28.10.2024 FR 2411760**

(71) Demandeur: **Commissariat à l'Energie Atomique
et aux Energies
Alternatives
75015 Paris (FR)**

(72) Inventeurs:
• **DAAMI, ANIS**
  **38054 Grenoble Cedex 09 (FR)**
• **RIGAL, FLORENCE**
  **38054 Grenoble cedex 09 (FR)**
• **FREY, LAURENT**
  **38054 Grenoble cedex 09 (FR)**

(74) Mandataire: **INNOV-GROUP
209 Avenue Berthelot
69007 Lyon (FR)**

(54) **SYSTEME D'IMAGERIE DE DISTANCE D'UNE SCENE**

(57) Système d'imagerie d'une scène (1), comportant :
- des moyens d'émission (2), configurés pour émettre un rayonnement laser (RL) à ondes entretenues modulées en fréquence suivant une direction de propagation (DP) ;
- un capteur d'images (3), comprenant un ensemble de photodétecteurs ;
- un composant optique (4), agencé pour incorporer des première et deuxième surfaces séparatrices (S1, S2) de sorte que les première et deuxième surfaces séparatrices (S1, S2) s'intersectent à angle droit suivant une droite d'intersection perpendiculaire à la direction de propagation (DP), et de sorte que les première et deuxième surfaces séparatrices (S1, S2) sont solidaires en rotation ;
- des moyens de traitement (5), configurés pour traiter un signal hétérodyne de chaque photodétecteur issu d'une recombinaison d'un faisceau objet avec un faisceau de référence (F1), de manière à obtenir une image de distance de la scène (1).

**Fig. 4**

EP 4 733 804 A1

**Description**

**Domaine technique**

L'invention se rapporte au domaine technique des systèmes d'imagerie de distance d'une scène, plus particulièrement d'une scène tridimensionnelle (3D), à partir d'une émission d'ondes cohérentes entretenues et modulées en fréquence (FMCW pour « *Frequency-Modulated Continuous Wave* » en langue anglaise) avec une détection hétérodyne.

L'invention trouve notamment son application dans la reconnaissance faciale pour téléphone portable, la réalité augmentée, la robotique, les drones, la logistique, le contrôle industriel etc.

**État de l'art**

Un système d'imagerie de distance d'une scène 3D connu de l'état de la technique utilise une technologie de détection et télémétrie d'ondes lumineuses (LiDAR pour « *Light Detection and Ranging* » en langue anglaise) avec une source laser entretenue et modulée en fréquence (FMCW pour *« Frequency-Modulated Continuous Wave* » en langue anglaise). Cette technologie est généralement désignée par l'acronyme LiDAR FMCW.

Il existe classiquement deux types de montages interférométriques pour mettre en œuvre cette technologie :

(i) montage bi-statique (e.g. de type Mach-Zehnder) où le champ d'observation (FOV pour *« Field of View »* en langue anglaise) et le champ d'émission (FOE pour *« Field of Emission »* en langue anglaise) sont désalignés ;
(ii) montage mono-statique (e.g. de type Michelson) où le FOE et le FOV sont alignés.

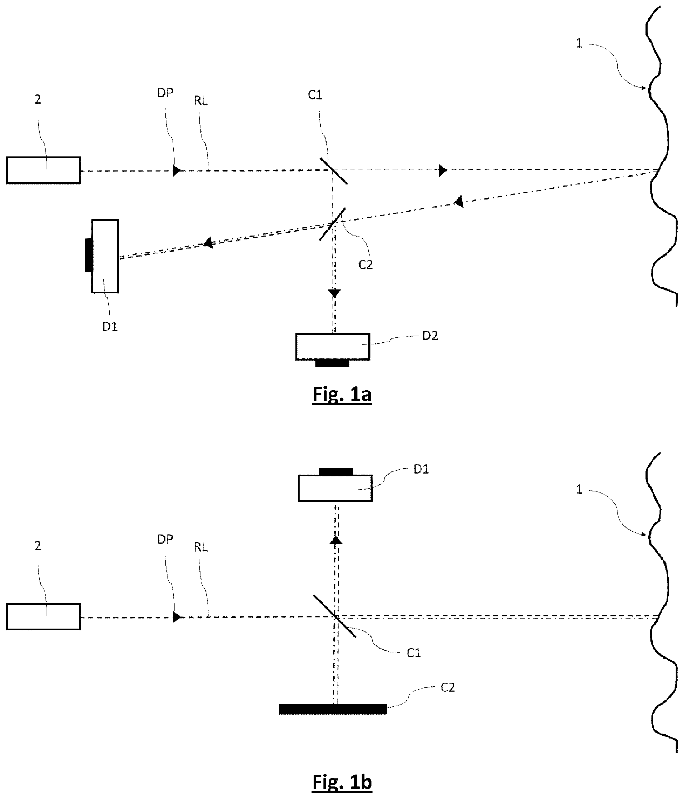

Un exemple de montage bi-statique de type Mach-Zehnder est illustré à la figure 1a. Le système d'imagerie de distance d'une scène 1 comporte :

- des moyens d'émission 2, configurés pour émettre un rayonnement laser RL à ondes entretenues modulées en fréquence suivant une direction de propagation DP ;
- des premier et deuxième composants optiques C1, C2 séparateurs ;
- des premier et deuxième détecteurs D1, D2.

Dans le cas (i), le recouvrement entre le FOE et le FOV n'est pas total en raison de leur désalignement qui varie en fonction de la distance entre la source laser 2 et le premier détecteur D1. Il est à noter qu'un montage bi-statique permet l'utilisation d'un deuxième détecteur D2 avec deux voies pour analyser le signal d'interférence.

Un exemple de montage mono-statique de type Michelson est illustré à la figure 1b. Le système d'imagerie de distance d'une scène 1 comporte :

- des moyens d'émission 2, configurés pour émettre un rayonnement laser RL à ondes entretenues modulées en fréquence suivant une direction de propagation DP ;
- des premier et deuxième composants optiques C1, C2, le premier composant optique C1 étant un composant séparateur, le deuxième composant optique C2 étant un miroir ;
- un détecteur D1.

Dans le cas (ii), le recouvrement entre le FOE et le FOV est total en raison de leur alignement. En revanche, un montage mono-statique ne permet pas l'utilisation d'un deuxième détecteur. Il existe une unique voie pour analyser le signal d'interférence.

Dans le cadre d'une détection hétérodyne, l'alignement entre le FOE et le FOV est un paramètre critique afin d'illuminer toute la scène vue dans le FOV et de mesurer précisément la fréquence du signal de battement des oscillations produit par les interférences.

De tels montages interférométriques de l'état de la technique ne sont pas entièrement satisfaisants dans la mesure où il est nécessaire d'ajuster au moins deux composants optiques pour obtenir et maintenir un alignement précis entre le FOE et le FOV. Dans le cas (i), les deux composants optiques peuvent être deux lames séparatrices ou deux cubes séparateurs. Dans le cas (ii), les deux composants optiques peuvent être une lame séparatrice (ou un cube séparateur) et le miroir de renvoi.

**Exposé de l'invention**

L'invention vise à remédier en tout ou partie aux inconvénients précités. A cet effet, l'invention a pour objet un système d'imagerie de distance d'une scène, comportant :

- des moyens d'émission (2), configurés pour émettre un rayonnement laser (RL) à ondes entretenues modulées en fréquence suivant une direction de propagation (DP) ;
- un capteur d'images (3), comprenant un ensemble de photodétecteurs ;
- une première surface séparatrice (S1), agencée pour séparer le rayonnement laser (RL) en :

un premier faisceau (F1), dit faisceau de référence, réfléchi par la première surface séparatrice (S1) vers le capteur d'images (3), et en un deuxième faisceau (F2), transmis par la première surface séparatrice (S1) vers la scène (1) ;

- une deuxième surface séparatrice (S2), agencée pour séparer le deuxième faisceau réfléchi (F2r) par la scène (1)_en :

un troisième faisceau (F3), dit faisceau objet, réfléchi par la deuxième surface séparatrice (S2) vers le capteurs d'images (3), et en un quatrième faisceau (F4), transmis par la deuxième surface séparatrice (S2) ;

- un composant optique (4), agencé pour incorporer les première et deuxième surfaces séparatrices (S1, S2) de sorte que les première et deuxième surfaces séparatrices (S1, S2) s'intersectent à angle droit suivant une droite d'intersection perpendiculaire à la direction de propagation (DP), et de sorte que les première et deuxième surfaces séparatrices (S1, S2) sont solidaires en rotation ;
- des moyens de traitement (5), configurés pour traiter un signal hétérodyne de chaque photodétecteur issu d'une recombinaison du faisceau objet (F3) avec le faisceau de référence (F1), de manière à obtenir une image de distance de la scène (1).

Ainsi, un tel système d'imagerie selon l'invention permet de garantir automatiquement (sans ajustement de composants optiques comme dans l'état de la technique) un alignement entre le faisceau de référence et le faisceau objet (i.e. entre le FOE et le FOV), grâce au composant optique incorporant les première et deuxième surfaces séparatrices de sorte que les première et deuxième surfaces séparatrices sont solidaires en rotation. Un tel alignement automatique entre le FOE et le FOV permet d'améliorer les performances en termes de rendement hétérodyne, et par là-même la qualité du signal hétérodyne de l'image de distance (ou de profondeur).

De plus, un tel système d'imagerie selon l'invention autorise un alignement du FOE et du FOV sur un même axe optique (contrairement à un montage de type Mach-Zehnder) et l'utilisation facultative d'un deuxième détecteur (contrairement à un montage de type Michelson).

Le système d'imagerie selon l'invention peut comporter une ou plusieurs des caractéristiques suivantes.

Selon une caractéristique de l'invention :

- le rayonnement laser (RL) possède une extension transversale à la direction de propagation (DP) ;
- le composant optique (4) possède une projection sur l'extension transversale couvrant entièrement l'extension transversale.

Ainsi, un avantage procuré est d'améliorer les performances du système en évitant des phénomènes de diffraction parasites aux bords du composant optique.

Selon une caractéristique de l'invention, le système d'imagerie comporte un isolateur optique (20) agencé pour isoler les moyens d'émission (2) du quatrième faisceau (F4).

Ainsi, un avantage procuré est d'améliorer la qualité du signal hétérodyne.

Selon une caractéristique de l'invention, le système d'imagerie comporte un dispositif dioptrique (6), de préférence une lentille ou un objectif, agencé entre le composant optique (4) et la scène (1) de manière à faire diverger le deuxième faisceau (F2) transmis par la première surface séparatrice (S1) vers la scène (1), le dispositif dioptrique (6) possédant un plan focal image dans lequel est agencé le capteur d'images (3).

Ainsi, un avantage procuré par le dispositif dioptrique est de faire diverger le deuxième faisceau transmis par la première surface séparatrice vers la scène pour obtenir un large FOE et de faire converger l'image de la scène sur le capteur d'images.

Selon une caractéristique de l'invention, le système d'imagerie comporte un capteur d'images additionnel (3') comprenant un ensemble de photodétecteurs additionnels ; la deuxième surface séparatrice (S2) étant agencée pour séparer le rayonnement laser (RL) en :

- un cinquième faisceau (F5), dit faisceau de référence additionnel, réfléchi par la deuxième surface séparatrice (S2) vers le capteur d'images additionnel (3'), et en
- un sixième faisceau (F6), transmis par la deuxième surface séparatrice (S2) vers la scène (1) ; la première surface séparatrice (S1) étant agencée pour séparer le sixième faisceau réfléchi (F6r) par la scène (1) en :
- un septième faisceau (F7), dit faisceau objet additionnel, réfléchi par la première surface séparatrice (S1) vers le capteur d'images additionnel (3'), et en
- un huitième faisceau (F8), transmis par la première surface séparatrice (S1) ;

les moyens de traitement (5) étant configurés pour traiter un signal hétérodyne de chaque photodétecteur additionnel issu d'une recombinaison du faisceau objet additionnel (F7) avec le faisceau de référence additionnel (F5), de manière à obtenir une image de distance de la scène (1).

Ainsi, un avantage procuré est de fournir une deuxième voie pour analyser le signal hétérodyne.

Selon une caractéristique de l'invention, l'isolateur optique (20) est agencé pour isoler les moyens d'émission (2) du huitième faisceau (F8).

Ainsi, un avantage procuré est d'améliorer la qualité du signal hétérodyne reçu par chaque photodétecteur additionnel.

Selon une caractéristique de l'invention, le dispositif dioptrique (6) est agencé entre le composant optique (4) et la scène (1) de manière à faire diverger le sixième faisceau (F6) transmis par la deuxième surface séparatrice (S2) vers la scène (1), le capteur d'images additionnel (3') étant agencé dans le plan focal image du dispositif dioptrique (6).

Ainsi, un avantage procuré par le dispositif dioptrique est de faire diverger le sixième faisceau transmis par la deuxième surface séparatrice vers la scène pour obtenir un large FOE et de faire converger l'image de la scène sur le capteur d'images additionnel.

Selon une caractéristique de l'invention, le composant optique (4) comporte un ensemble de prismes optiques (P1, P2, P3, P4) agencés de sorte que leurs interfaces (I12, I23, I34, I14) forment les première et deuxième surfaces séparatrices (S1, S2).

Ainsi, un avantage procuré par les prismes optiques est de conférer une grande stabilité au système afin d'obtenir un signal hétérodyne de qualité, facilement exploitable avec un signal de battement optimisé. En particulier, les prismes optiques ne sont pas affectés en leur sein par des vibrations mécaniques qui pourraient modifier le positionnement relatif des première et deuxième surfaces séparatrices.

Selon une caractéristique de l'invention, le composant optique (4) est un cube (C) comportant quatre prismes optiques (P1, P2, P3, P4) de forme triangulaire agencés pour obtenir une configuration en forme de « X ».

Ainsi, un avantage procuré par un tel composant est sa facilité de fabrication. Il est à noter que la propriété dichroïque des X-cubes (dénomination commerciale) n'est pas utile dans le cadre de l'invention. Les quatre prismes optiques de forme triangulaire, agencés pour obtenir une configuration en forme de « X » sont avantageusement dépourvus de revêtements dichroïques.

Selon une caractéristique de l'invention, les première et deuxième surfaces séparatrices (S1, S2) présentent chacune un coefficient de réflexion égal à 50% et un coefficient de transmission égal à 50%.

Ainsi, un avantage procuré est de maximiser l'intensité du signal hétérodyne.

*Définitions*

Par « scène », on entend l'ensemble des objets, surfaces, textures etc. disposés dans un espace tridimensionnel, qui sont capturés par le système d'imagerie.

Par « surface séparatrice », on entend une surface conçue pour séparer spatialement un faisceau incident en deux faisceaux distincts.

Par « incorporer », on entend que les première et deuxième surfaces séparatrices sont intégrées à l'intérieur du composant optique de manière à obtenir une solidarité mécanique, notamment en rotation, entre le composant optique et les première et deuxième surfaces séparatrices. En d'autres termes, les première et deuxième surfaces séparatrices ne peuvent être déplacées indépendamment du composant optique.

Par « s'intersectent à angle droit », on entend que les plans définissant les première et deuxième surfaces séparatrices forment un angle dièdre de 90°.

Par « droite d'intersection », on entend la ligne (plus précisément le segment de droite) partagée par les deux plans définissant les première et deuxième surfaces séparatrices. En d'autres termes, la « droite d'intersection » est l'arête commune le long de laquelle se rencontrent les deux plans définissant les première et deuxième surfaces séparatrices.

Par « signal hétérodyne », on entend un signal résultant de la superposition (interférences) de deux ondes lumineuses de fréquences différentes, utilisé pour mesurer les décalages de fréquence entre le faisceau de référence et le faisceau objet, et en déduire des informations de distance et de vitesse de la scène. Plus précisément, les interférences génèrent des battements dont la fréquence correspond à la différence entre les fréquences des deux ondes superposées.

Par « isolateur optique », on entend un composant optique conçu pour permettre à la lumière de se propager dans une seule direction spécifique, tout en bloquant son retour dans la direction opposée.

Par « dispositif dioptrique », on entend un dispositif comportant un ensemble de dioptres permettant de modifier la propagation de la lumière par réfraction.

Par « coefficient de réflexion », on entend un coefficient de réflexion en intensité à la longueur d'onde du rayonnement laser.

Par « coefficient de transmission », on entend un coefficient de transmission en intensité à la longueur d'onde du rayonnement laser.

**Brève description des dessins**

D'autres caractéristiques et avantages apparaîtront dans l'exposé détaillé de différents modes de réalisation de l'invention, l'exposé étant assorti d'exemples et de références aux dessins joints.

Figure 1a (déjà commentée) est un schéma synoptique d'un système d'imagerie selon l'état de la technique, utilisant un montage bi-statique de type Mach-Zehnder.

Figure 1b (déjà commentée) est un schéma synoptique d'un système d'imagerie selon l'état de la technique, utilisant un montage mono-statique de type Michelson.

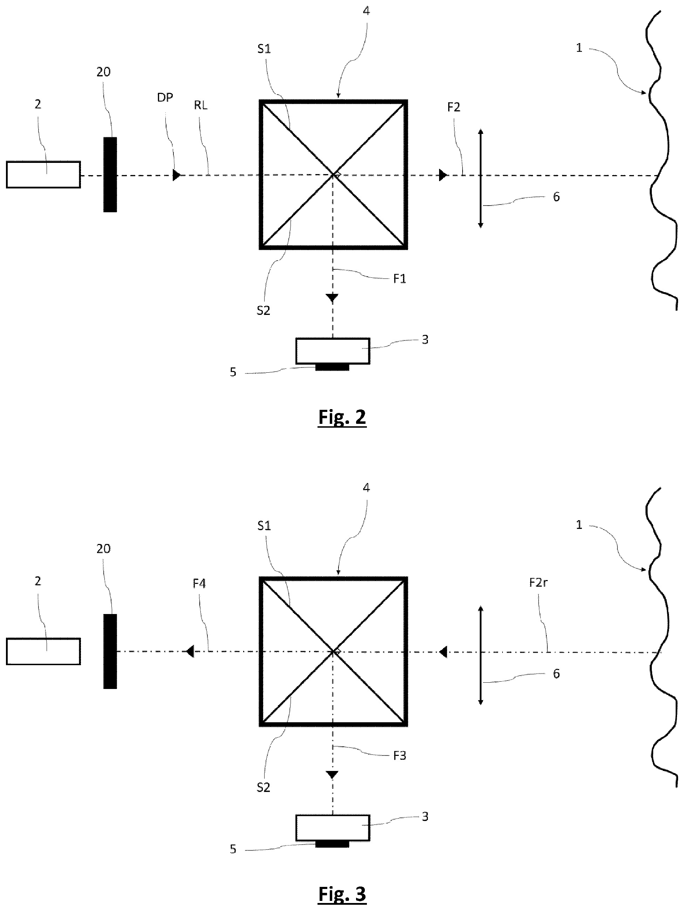

Figure 2 est un schéma synoptique d'un système d'imagerie selon l'invention, illustrant le trajet aller (i.e. en amont de la scène) du rayonnement laser, selon un mode de réalisation impliquant un unique détecteur (une voie).

Figure 3 est un schéma synoptique d'un système d'imagerie selon l'invention, illustrant le trajet retour (i.e. en aval de la scène) du rayonnement laser, selon un mode de réalisation impliquant un unique détecteur (une voie).

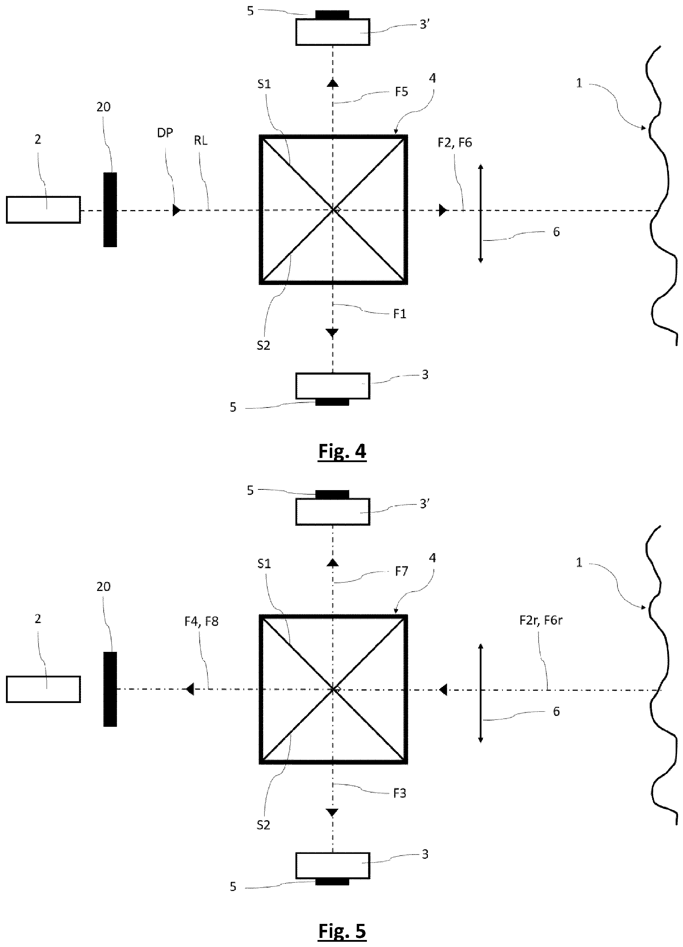

Figure 4 est un schéma synoptique d'un système d'imagerie selon l'invention, illustrant le trajet aller (i.e. en amont de la scène) du rayonnement laser, selon un mode de réalisation impliquant deux détecteurs (deux voies).

Figure 5 est un schéma synoptique d'un système d'imagerie selon l'invention, illustrant le trajet retour (i.e. en amont de la scène) du rayonnement laser, selon un mode de réalisation impliquant deux détecteurs (deux voies).

Figure 6 est une vue schématique illustrant un composant optique utilisé dans un système d'imagerie selon l'invention.

Il est à noter que les dessins décrits ci-avant sont schématiques, et ne sont pas nécessairement à l'échelle par souci de lisibilité et pour en simplifier leur compréhension.

## Exposé détaillé des modes de réalisation

Les éléments identiques ou assurant la même fonction porteront les mêmes références pour les différents modes de réalisation, par souci de simplification.
Un objet de l'invention est un système d'imagerie de distance d'une scène 1 :

- des moyens d'émission (2), configurés pour émettre un rayonnement laser (RL) à ondes entretenues modulées en fréquence suivant une direction de propagation (DP) ;
- un capteur d'images (3), comprenant un ensemble de photodétecteurs ;
- une première surface séparatrice (S1), agencée pour séparer le rayonnement laser (RL) en :

    un premier faisceau (F1), dit faisceau de référence, réfléchi par la première surface séparatrice (S1) vers le capteur d'images (3), et en
    un deuxième faisceau (F2), transmis par la première surface séparatrice (S1) vers la scène (1) ;

- une deuxième surface séparatrice (S2), agencée pour séparer le deuxième faisceau réfléchi (F2r) par la scène (1) en :

    un troisième faisceau (F3), dit faisceau objet, réfléchi par la deuxième surface séparatrice (S2) vers le capteurs d'images (3), et en
    un quatrième faisceau (F4), transmis par la deuxième surface séparatrice (S2) ;

- un composant optique (4), agencé pour incorporer les première et deuxième surfaces séparatrices (S1, S2) de sorte que les première et deuxième surfaces séparatrices (S1, S2) s'intersectent à angle droit suivant une droite d'intersection perpendiculaire à la direction de propagation (DP), et de sorte que les première et deuxième surfaces séparatrices (S1, S2) sont solidaires en rotation ;
- des moyens de traitement (5), configurés pour traiter un signal hétérodyne de chaque photodétecteur issu d'une recombinaison du faisceau objet (F3) avec le faisceau de référence (F1), de manière à obtenir une image de distance de la scène (1).

### Moyens d'émission

Les moyens d'émission 2 sont configurés pour émettre un rayonnement laser RL à ondes entretenues modulées en fréquence suivant une direction de propagation DP. La fréquence optique du rayonnement laser RL est de préférence modulée avec une rampe linéaire périodique.
Le rayonnement laser RL possède une extension transversale à la direction de propagation DP.
A titre d'exemples non limitatifs, les moyens d'émission 2 comportent une source laser choisie parmi un laser à émission par la tranche, une diode laser à cavité verticale émettant par la surface, un laser à cascade quantique.
A titre d'exemples non limitatifs, la longueur d'onde du rayonnement laser RL peut être 850 nm (GaAs), 940 nm (InP), comprise dans la gamme 1,3 $\mu$m - 1,55 $\mu$m, comprise dans la gamme 3 $\mu$m - 5 $\mu$m, comprise dans la gamme 8 $\mu$m - 14 $\mu$m.

### Capteur(s) d'images

Le capteur d'images 3 comprend un ensemble de photodétecteurs.
Le système d'imagerie peut comporter un capteur d'images additionnel 3' comprenant un ensemble de photodétecteurs additionnels.
A titre d'exemples non limitatifs, les photodétecteurs peuvent être choisis entre des photodiodes (éventuellement à avalanche), des micro-bolomètres (pour l'infrarouge).

### Composant optique

Le composant optique 4 incorpore les première et deuxième surfaces séparatrices S1, S2. En d'autres termes, les première et deuxième surfaces séparatrices S1, S2 sont intégrées au sein du composant optique 4 de manière à obtenir une solidarité mécanique, en particulier une solidarité en rotation.
Les première et seconde surfaces séparatrices S1, S2 sont incorporées au composant optique 4 de manière à s'intersecter à angle droit suivant une droite d'intersection perpendiculaire à la direction de propagation DP du rayonnement laser RL. Le composant optique 4 est avantageusement agencé de manière à posséder une projection sur l'extension transversale du rayonnement laser RL couvrant entièrement ladite extension transversale. A titre d'exemple non limitatif, la projection du composant optique 4 sur l'extension transversale du rayonnement laser RL peut être comprise entre 3 mm et 1 cm.
La première surface séparatrice S1 est agencée pour séparer le rayonnement laser RL en :

- un premier faisceau F1, dit faisceau de référence, réfléchi par la première surface séparatrice S1 vers le capteur d'images 3, et en
- un deuxième faisceau F2, transmis par la première surface séparatrice S1 vers la scène 1.

La deuxième surface séparatrice S2 est agencée pour séparer le deuxième faisceau réfléchi F2r par la scène 1 en :

- un troisième faisceau F3, dit faisceau objet, réfléchi par la deuxième surface séparatrice S2 vers le capteurs d'images 3, et en
- un quatrième faisceau F4, transmis par la deuxième surface séparatrice S2.

En cas de présence d'un capteur d'images additionnel 3', la deuxième surface séparatrice S2 est agencée pour séparer le rayonnement laser RL en :

- un cinquième faisceau F5, dit faisceau de référence additionnel, réfléchi par la deuxième surface séparatrice S2 vers le capteur d'images additionnel 3', et en
- un sixième faisceau F6, transmis par la deuxième surface séparatrice S2 vers la scène 1.

Le cas échéant, la première surface séparatrice S1 est agencée pour séparer le sixième faisceau réfléchi F6r par la scène 1 en :

- un septième faisceau F7, dit faisceau objet additionnel, réfléchi par la première surface séparatrice S1 vers le capteur d'images additionnel 3', et en
- un huitième faisceau F8, transmis par la première surface séparatrice S1.

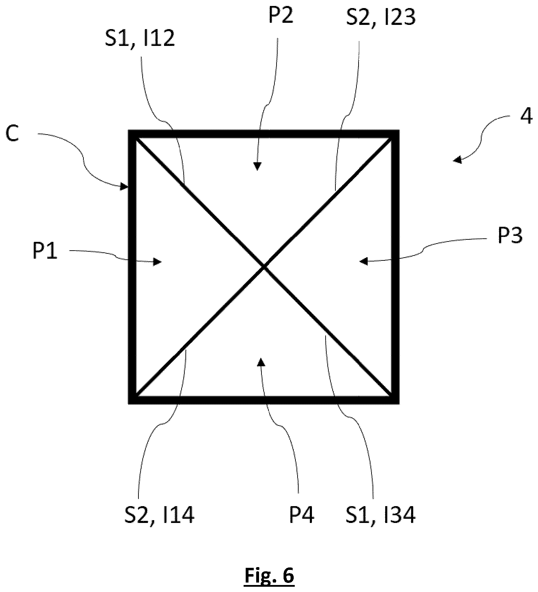

Le composant optique 4 comporte avantageusement un ensemble de prismes optiques P1, P2, P3, P4 agencés de sorte que leurs interfaces I12, I23, I34, I14 forment les première et deuxième surfaces séparatrices S1, S2. Comme illustré à la figure 6, le composant optique 4 peut comporter quatre prismes optiques notés P1, P2, P3, P4 dans le sens horaire. La première surface séparatrice S1 est formée par l'interface I12 entre le premier prisme optique P1 et le deuxième prisme optique P2 et par l'interface I34 entre le troisième prisme optique P3 et le quatrième prisme optique P4. La deuxième surface séparatrice S2 est formée par l'interface I23 entre le deuxième prisme optique P2 et le troisième prisme optique P3 et par l'interface I14 entre le premier prisme optique P1 et le quatrième prisme optique P4.

Le composant optique 4 est avantageusement un cube C comportant quatre prismes optiques P1, P2, P3, P4 de forme triangulaire agencés pour obtenir une configuration en forme de « X ». Les première et deuxième surfaces séparatrices S1, S2 présentent avantageusement chacune un coefficient de réflexion égal à 50% et un coefficient de transmission égal à 50%.

*Moyens de traitement*

Les moyens de traitement 5 sont configurés pour traiter un signal hétérodyne de chaque photodétecteur issu d'une recombinaison du faisceau objet F3 avec le faisceau de référence F1, de manière à obtenir une image de distance de la scène 1. Les moyens de traitement 5 sont électriquement connectés aux capteurs d'images 3, 3'. Les moyens de traitement 5 peuvent être électriquement connectés aux moyens d'émission 2. Toutefois, il est possible de détecter des rampes sans nécessairement connecter électriquement les moyens de traitement 5 aux moyens d'émission 2.

Les interférences entre le faisceau objet F3 et le faisceau de référence F1 produisent des battements dont la fréquence correspond à la différence entre les fréquences du faisceau objet F3 et du faisceau de référence F1. Plus précisément, lorsque la fréquence optique du rayonnement laser RL est modulée avec une rampe linéaire périodique, la fréquence de battement des oscillations, notée $f_R$, vérifie la relation suivante :

$$f_R = \frac{2Bz}{cT}$$

- « T » est la durée de la rampe,
- « c » est la vitesse de la lumière dans le vide,
- « B » est l'excursion de la fréquence optique (« *chirp* » en langue anglaise) du rayonnement laser RL pendant la durée « T » de la rampe,
- « z » est une information de distance (profondeur) sur la scène 1.

On peut déduire une approximation de « *z* » du nombre de périodes, noté « N », mesurées pendant la durée « T » de la rampe par la formule suivante (notée Frm 1) :

$$z \approx \frac{Nc}{2B}$$

La résolution en distance, notée $\delta z$, peut être approximée selon la formule suivante :

$$\delta z \approx \frac{c}{2B}$$

Il est donc possible d'obtenir une cartographie de distance z=f(x, y) où « x » et « y » désignent des coordonnées de la scène 1 et « f » désigne une fonction mathématique.

En cas de présence d'un capteur d'images additionnel 3', les moyens de traitement 5 sont avantageusement configurés pour traiter un signal hétérodyne de chaque photodétecteur additionnel issu d'une recombinaison du faisceau objet additionnel F7 avec le faisceau de référence additionnel F5, de manière à obtenir une image de distance de la scène 1.

A titre d'exemple non limitatif, les moyens de traitement comportent un processeur configuré pour calculer « *z* » à partir de la formule « Frm 1 » explicitée ci-avant.

De tels moyens de traitement 5 sont connus de l'homme du métier.

*Dispositif dioptrique*

Le système d'imagerie comporte avantageusement un dispositif dioptrique 6 agencé entre le composant optique 4 et la scène 1 de manière à faire diverger le deuxième faisceau F2 transmis par la première surface séparatrice S1 vers la scène 1.

Le dispositif dioptrique 6 possède un plan focal image dans lequel est agencé le capteur d'images 3. La distance focale est choisie de manière à être inférieure à la distance entre le centre optique du dispositif dioptrique 6 et la scène 1.

Le dispositif dioptrique 6 est de préférence une lentille ou un objectif.

En cas de présence d'un capteur d'images additionnel 3', le dispositif dioptrique 6 est avantageusement agencé entre le composant optique 4 et la scène 1 de manière à faire diverger le sixième faisceau F6 transmis par la deuxième surface séparatrice S2 vers la scène 1. Le capteur d'images additionnel 3' est alors avantageusement agencé dans le plan focal image du dispositif dioptrique 6.

*Isolateur optique*

Le système d'imagerie comporte avantageusement un isolateur optique 20 agencé pour isoler les moyens d'émission 2 du quatrième faisceau F4. En d'autres termes, le quatrième faisceau F4, transmis par la deuxième surface séparatrice S2, est isolé du rayonnement laser RL par l'isolateur optique 20.

En cas de présence d'un capteur d'images additionnel 3', l'isolateur optique 20 est avantageusement agencé pour isoler les moyens d'émission 2 du huitième faisceau F8. En d'autres termes, le huitième faisceau F8, transmis par la première surface séparatrice S1, est isolé du rayonnement laser RL par l'isolateur optique 20.

A titre d'exemple non limitatif, l'isolateur optique 20 peut être un isolateur de type Faraday.

L'invention ne se limite pas aux modes de réalisation exposés. L'homme du métier est mis à même de considérer leurs combinaisons techniquement opérantes, et de leur substituer des équivalents.

**Revendications**

1. Système d'imagerie de distance d'une scène (1), comportant :

   - des moyens d'émission (2), configurés pour émettre un rayonnement laser (RL) à ondes entretenues modulées en fréquence suivant une direction de propagation (DP) ;
   - un capteur d'images (3), comprenant un ensemble de photodétecteurs ;
   - une première surface séparatrice (S1), agencée pour séparer le rayonnement laser (RL) en :

      un premier faisceau (F1), dit faisceau de référence, réfléchi par la première surface séparatrice (S1) vers le capteur d'images (3), et en
      un deuxième faisceau (F2), transmis par la première surface séparatrice (S1) vers la scène (1) ;

   - une deuxième surface séparatrice (S2), agencée pour séparer le deuxième faisceau réfléchi (F2r) par la scène (1) en :

      un troisième faisceau (F3), dit faisceau objet, réfléchi par la deuxième surface séparatrice (S2) vers le capteurs d'images (3), et en
      un quatrième faisceau (F4), transmis par la deuxième surface séparatrice (S2) ;

   - un composant optique (4), agencé pour incorporer les première et deuxième surfaces séparatrices (S1, S2) de sorte que les première et deuxième surfaces séparatrices (S1, S2) s'intersectent à angle droit suivant une droite d'intersection perpendiculaire à la direction de propagation (DP), et de sorte que les première et deuxième surfaces séparatrices (S1, S2) sont solidaires en rotation ;
   - des moyens de traitement (5), configurés pour traiter un signal hétérodyne de chaque photodétecteur issu d'une recombinaison du faisceau objet (F3) avec le faisceau de référence (F1), de manière à obtenir une image de distance de la scène (1).

2. Système selon la revendication 1, dans lequel :

   - le rayonnement laser (RL) possède une extension transversale à la direction de propagation (DP) ;
   - le composant optique (4) possède une projection sur l'extension transversale couvrant entièrement l'extension transversale.

3. Système selon la revendication 1 ou 2, comportant un isolateur optique (20) agencé pour isoler les moyens d'émission (2) du quatrième faisceau (F4).

4. Système selon l'une des revendications 1 à 3, comportant un dispositif dioptrique (6), de préférence une lentille ou un objectif, agencé entre le composant optique (4) et la scène (1) de manière à faire diverger le deuxième faisceau (F2) transmis par la première surface séparatrice (S1) vers la scène (1), le dispositif dioptrique (6) possédant un plan focal image dans lequel est agencé le capteur d'images (3).

5. Système selon l'une des revendications 1 à 4, comportant un capteur d'images additionnel (3') comprenant un ensemble de photodétecteurs additionnels ;

   la deuxième surface séparatrice (S2) étant agencée pour séparer le rayonnement laser (RL) en :

   - un cinquième faisceau (F5), dit faisceau de référence additionnel, réfléchi par la deuxième surface séparatrice (S2) vers le capteur d'images additionnel (3'), et en
   - un sixième faisceau (F6), transmis par la deuxième surface séparatrice (S2) vers la scène (1) ;

   la première surface séparatrice (S1) étant agencée pour séparer le sixième faisceau réfléchi (F6r) par la scène (1) en :

   - un septième faisceau (F7), dit faisceau objet additionnel, réfléchi par la première surface séparatrice (S1) vers le capteur d'images additionnel (3'), et en
   - un huitième faisceau (F8), transmis par la première surface séparatrice (S1) ;

   les moyens de traitement (5) étant configurés pour traiter un signal hétérodyne de chaque photodétecteur additionnel issu d'une recombinaison du faisceau objet additionnel (F7) avec le faisceau de référence additionnel (F5), de manière à obtenir une image de distance de la scène (1).

6. Système selon la revendication 5 en combinaison avec la revendication 3, dans lequel l'isolateur optique (20) est agencé pour isoler les moyens d'émission (2) du huitième faisceau (F8).

7. Système selon la revendication 5 ou 6 en combinaison avec la revendication 4, dans lequel le dispositif dioptrique (6) est agencé entre le composant optique (4) et la scène (1) de manière à faire diverger le sixième faisceau (F6) transmis par la deuxième surface séparatrice (S2) vers la scène (1), le capteur d'images additionnel (3') étant agencé dans le plan focal image du dispositif dioptrique (6).

8. Système selon l'une des revendications 1 à 7, dans lequel le composant optique (4) comporte un ensemble de prismes optiques (P1, P2, P3, P4) agencés de sorte que leurs interfaces (I12, I23, I34, I14) forment les première et deuxième surfaces séparatrices (S1, S2).

9. Système selon la revendication 8, dans lequel le composant optique (4) est un cube (C) comportant quatre prismes optiques (P1, P2, P3, P4) de forme triangulaire agencés pour obtenir une configuration en forme de « X ».

10. Système selon l'une des revendications 1 à 9, dans lequel les première et deuxième surfaces séparatrices (S1, S2) présentent chacune un coefficient de réflexion égal à 50% et un coefficient de transmission égal à 50%.

**Fig. 1a**

**Fig. 1b**

**Fig. 2**

**Fig. 3**

**Fig. 4**

**Fig. 5**

**Fig. 6**

RAPPORT DE RECHERCHE EUROPEENNE

**Numéro de la demande**

EP 25 19 8530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 3 106 417 A1 (COMMISSARIAT ENERGIE ATOMIQUE [FR]) 23 juillet 2021 (2021-07-23) * alinéas [0001], [0067], [0069]; figure 7 * | 1-10 | INV. G01S7/481 G01S7/4912 G01S17/34 G01S17/894 |
| | ----- | | |
| A | FR 3 138 529 A1 (COMMISSARIAT ENERGIE ATOMIQUE [FR]) 2 février 2024 (2024-02-02) * alinéa [0006] - alinéa [0009]; figure 1 * | 1-10 | |
| | ----- | | |
| A | FR 3 001 054 A1 (UPWIND [FR]) 18 juillet 2014 (2014-07-18) * page 1, ligne 15 - ligne 16; page 11, ligne 1 - ligne 5; page 11, ligne 29 - page 12, ligne 9; figures 1, 3 * | 1-10 | |
| | ----- | | |
| A | US 5 646 929 A (CHOI YANG-OH [KR]) 8 juillet 1997 (1997-07-08) * colonne 1, ligne 5 - ligne 9; figure 2 * | 1-10 | |
| | ----- | | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 30 janvier 2026 | Kirscher, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 19 8530

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-01-2026

| Document brevet cité au rapport de recherche | | Date de publication | Membre(s) de la famille de brevet(s) | | Date de publication |
|---|---|---|---|---|---|
| FR 3106417 | A1 | 23-07-2021 | CN | 115298568 A | 04-11-2022 |
| | | | EP | 4090993 A1 | 23-11-2022 |
| | | | FR | 3106417 A1 | 23-07-2021 |
| | | | US | 2023048766 A1 | 16-02-2023 |
| | | | WO | 2021144357 A1 | 22-07-2021 |
| FR 3138529 | A1 | 02-02-2024 | CN | 117471477 A | 30-01-2024 |
| | | | FR | 3138529 A1 | 02-02-2024 |
| | | | US | 2024045061 A1 | 08-02-2024 |
| FR 3001054 | A1 | 18-07-2014 | AUCUN | | |
| US 5646929 | A | 08-07-1997 | CN | 1139263 A | 01-01-1997 |
| | | | JP | H08212587 A | 20-08-1996 |
| | | | KR | 960015443 A | 22-05-1996 |
| | | | US | 5646929 A | 08-07-1997 |

EPO FORM P0460

Pour tout renseignement concernant cette annexe : voir Journal Officiel de l'Office européen des brevets, No.12/82